# EUROPÄISCHE PATENTSCHRIFT

(11) **EP 4 095 364 B1**
(45) Veröffentlichungstag und Bekanntmachung des Hinweises auf die Patenterteilung: **10.04.2024**
(21) Anmeldenummer: 22174734.8
(22) Anmeldetag: 23.05.2022
(51) Int. Cl.: F01N 9/00

(54) **VERFAHREN ZUM BETREIBEN EINER VERBRENNUNGSKRAFTMASCHINE**
METHOD FOR OPERATING A COMBUSTION ENGINE
PROCÉDÉ PERMETTANT DE FAIRE FONCTIONNER UN MOTEUR À COMBUSTION INTERNE

(30) Priorität: 26.05.2021 DE 102021113499
(43) Veröffentlichungstag der Anmeldung: 30.11.2022
(73) Patentinhaber: VOLKSWAGEN AG, 38440 Wolfsburg (DE)
(72) Erfinder: Paukner, Stefan, 38442 Wolfsburg (DE); Schlüter, Lars, 38458 Velpke (DE); Baron von Ceumern-Lindenstjerna, Falk-Christian, 38124 Braunschweig (DE); Kaack, Michael, 38531 Rötgesbüttel (DE)
(74) Vertreter: Gulde & Partner

(56) Entgegenhaltungen:
- DE-A1-102018 124 869
- DE-A1-102019 203 598
- DE-A1-102020 100 539

## Beschreibung

Die Erfindung betrifft ein Verfahren zum Betreiben einer Verbrennungskraftmaschine in einem Fahrzeug, das ein stromabwärts der Verbrennungskraftmaschine angeordnetes Abgasnachbehandlungssystem, das mindestens einen Abgaskatalysator aufweist, umfasst. Die Erfindung betrifft ferner ein zur Durchführung des Verfahrens zum Betreiben der Verbrennungskraftmaschine eingerichtetes Fahrzeug.

Die aktuelle und eine zukünftig immer schärfer werdende Abgasgesetzgebung stellt hohe Anforderungen an die motorischen Rohemissionen und die Abgasnachbehandlung von Verbrennungsmotoren. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen.

Rußpartikel entstehen besonders nach einem Kaltstart des Verbrennungsmotors aufgrund einer unvollständigen Verbrennung in Kombination mit einem unterstöchiometrischen Verbrennungsluftverhältnis sowie kalter Zylinderwände während des Kaltstarts. Ihrem Zweck gemäß werden Partikelfilter durch Partikel beladen, woraus ein Abgasgegendruck entsteht, der permanent wächst. Damit der Abgasgegendruck nicht zu stark ansteigt, müssen Partikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Partikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Motors notwendig. Häufig sind dazu zusätzliche Maßnahmen erforderlich. Dazu kommen als Maßnahmen beispielsweise eine Temperaturerhöhung durch eine Zündwinkelverstellung, eine zeitweise Magerverstellung des Motors, das Einblasen von Sekundärluft in die Abgasanlage oder eine Kombination dieser Maßnahmen infrage. Die Regeneration verbraucht also zusätzliche Energie.

Andere Maßnahmen zur Abgasreinigung wie Drei-Wege-Katalysatoren sollen die Schadstoffe im Abgas reduzieren, indem diese die abbauenden chemischen Reaktionen beschleunigen. Dies funktioniert allerdings erst, wenn ein Katalysator seine Light-Off-Temperatur von mehreren hundert Grad Celsius erreicht hat. Katalysatoren sind deswegen gerade in der kritischen Phase direkt nach dem Starten des Motors weitgehend unwirksam, wo die Abgaszusammensetzung noch besonders ungünstig ist. Manche Motoren emittieren trotz Katalysator nach dem Kaltstart innerhalb einer halben Minute mehr Schadstoffe als bei einer rund 500 Kilometer langen Überlandfahrt bzw. rund 70 Prozent der CO- und etwa 90 Prozent der CH-Emissionen eines benzinbetriebenen Personenwagens werden in den ersten Minuten nach dem Kaltstart gemessen. Weiterhin werden die Kaltstartemissionen in besonderem Maße durch die Motorlast beeinflusst. Eine hohe Last führt dabei zu hohen Rohemissionen im Verhältnis zu niedrigeren Rohemissionen bei niedriger Last. Insbesondere im Fall noch nicht aktiver Abgasbehandlungsmaßnahmen steigen demzufolge auch die Endrohremissionen. Die Kaltstartphase ist somit maßgeblich für die Einhaltung der gesetzlich vorgeschriebenen Partikelgrenzwerte.

DE 10 2018 212 926 A1 betrifft ein Verfahren zum Betreiben einer Hybridantriebseinrichtung eines Kraftfahrzeugs. Dabei wird ein von einer Brennkraftmaschine bereitgestelltes Antriebsdrehmoment ausgehend von einem Startdrehmoment bis zu einem Zieldrehmoment mit einem bestimmten Drehmomentgradienten erhöht. Ferner umfasst die Hybridantriebseinrichtung einen Partikelfilter. Der Drehmomentgradient wird dabei auf einen Gradientengrenzwert begrenzt.

DE 10 2019 115 180 A1 beschreibt ein System und Verfahren zum Beschleunigen der Motorerwärmung einer Emissionsvorrichtung bei einem Kaltstart. Dabei wird vor einem Kaltstart eines Motors ein E-Kompressor betrieben. Durch Öffnen eines Rückführventils eines Rückführkanals, der mit dem E-Kompressor gekoppelt ist, strömt komprimierte Ansaugluft von einem Auslass des E-Kompressors durch den Rückführkanal zu einem Einlass des E-Kompressors. Der Motor wird gestartet, wenn eine Temperatur an dem Auslass des E-Kompressors eine Schwellentemperatur erreicht. Die erwärmte Ansaugluft, die aus dem Strömen komprimierter Ansaugluft durch den Rückführkanal resultiert, erhöht die Verbrennungstemperatur und eine Abgastemperatur, was die Katalysatoranspringzeit der Emissionsvorrichtung verringert.

DE 10 2004 058 942 A1 beschreibt verschiedene Systeme und Verfahren zur Ausführung einer Verbrennung mit Kraftstoffabschaltung in einigen oder allen Motorzylindern eines Fahrzeugs. Unter anderem erfolgt die Kraftstoffabschaltung bzw. deren Deaktivierung in Abhängigkeit einer Mindesttemperatur, die die Abgasemissionsregeleinrichtungen aufweisen sollen. Liegt die Temperatur der Abgasemissionsregeleinrichtungen unterhalb der Mindesttemperatur wird die Kraftstoffabschaltung deaktiviert und die Verbrennung aktiviert. Es werden weiterhin verschiedene Routinen zur Ausführung einer Verbrennung mit Kraftstoffabschaltung vorgestellt, die beispielsweise auf der Katalysatortemperatur oder einer Motordrehzahl basieren.

DE 10 2018 124 869 A1 beschreibt ein Verfahren zur Abgasnachbehandlung eines Verbrennungsmotors, der über seinen Einlass mit einem Luftversorgungssystem und über seinen Auslass mit einer Abgasanlage verbunden ist. In der Abgasanlage ist eine Abgasnachbehandlungskomponente zur Konvertierung von Schadstoffen im Abgas des Verbrennungsmotors angeordnet. Dabei ist vorgesehen, dass der Lastzustand des Verbrennungsmotors sowie die streckenbezogenen Emissionen, insbesondere die streckenbezogenen NOx-Emissionen, ermittelt werden.

Aus der DE 10 2019 203 598 A1 ist ein Verfahren zum Betreiben eines Kraftfahrzeugs mit einem Verbrennungsmotor bekannt. Dabei sind vor der Abfahrt des Kraftfahrzeugs Vorheizmaßnahmen zum Erreichen von Betriebstemperaturen von Komponenten des Abgasnachbehandlungssystems und/oder für eine Lambdasonde des Kraftfahrzeugs vorgesehen.

Ferner beschreibt die DE 10 2020 100 539 A1 ein Verfahren zum Betreiben eines Kraftfahrzeugs mit einem Diesel-Hydrid-Antrieb aus einem Verbrennungsmotor und einem elektrischen Antriebsmotor. Dabei ist der Verbrennungsmotor mit einem Generator koppelbar, um eine Batterie zur Versorgung des elektrischen Antriebsmotors aufzuladen. Der Verbrennungsmotor ist mit seinem Auslass mit einer Abgasanlage verbunden, in welcher mehrere Abgasnachbehandlungskomponenten angeordnet sind.

Der Erfindung liegt nun die Aufgabe zugrunde, ein Verfahren und ein entsprechendes Fahrzeug zum Betreiben einer Verbrennungskraftmaschine in einem Fahrzeug, das ein stromabwärts der Verbrennungskraftmaschine angeordnetes Abgasnachbehandlungssystem, das mindestens einen Abgaskatalysator aufweist, umfasst, bereitzustellen, durch das die Erzeugung der Rohemissionen während der Kaltstartphase reduziert wird.

Diese Aufgabe wird durch ein Verfahren und ein Fahrzeug mit den Merkmalen der unabhängigen Ansprüche gelöst.

Vorteilhafte Ausgestaltungen der Erfindung sind in den Unteransprüchen gekennzeichnet. Erfindungsgemäß wird ein Verfahren zum Betreiben einer Verbrennungskraftmaschine in einem Fahrzeug gemäss unabhängigen Anspruch 1 vorgeschlagen.

Bevorzugt erfolgt die Festlegung und Einhaltung des mindestens einen Begrenzungswerts für ein von der Verbrennungskraftmaschine bereitstellbares Drehmoment oder für eine von der Verbrennungskraftmaschine bereitstellbare Leistung durch Einsatz eines Drehzahlbegrenzers. Insbesondere im Falle eines Drehmoments lässt sich so eine zweckmäßige Begrenzung realisieren, da das Drehmoment in direktem Zusammenhang mit der Drehzahl steht. Ein Drehzahlbegrenzer ist in die elektronische Motorsteuerungen von der Verbrennungskraftmaschine integriert. Er kontrolliert die der Verbrennungskraftmaschine zugeführte Kraftstoffmenge.

Das Verfahren umfasst den Startvorgang der kalten Verbrennungskraftmaschine, wobei bei dem Startvorgang die Temperatur des Abgaskatalysators unterhalb seiner Light-Off-Temperatur liegt. Durch den Betrieb und die damit einhergehende Beaufschlagung des Abgaskatalysators mit heißem Abgas wird dem Abgaskatalysator durch Wärmeübergang Energie zugeführt, sodass sich infolgedessen seine Temperatur erhöht, bis sie schließlich oberhalb der Light-off-Temperatur liegt. Unterstützt wird die Erwärmung durch die einsetzende Katalysatortätigkeit selbst, nämlich durch die exothermen, im Katalysator stattfindenden Konvertierungsreaktionen.

Unter "Light-Off-Temperatur" wird eine Katalysatortemperatur verstanden, bei der 50% der einströmenden Schadstoffe, katalytisch umgewandelt werden. Die konkrete Höhe der Light-Off-Temperatur hängt von der individuellen Katalysatorbeschichtung ab.

Geeignete Abgaskatalysatoren, die für die Anordnungen Verwendung finden können bzw. die Gegenstand des Verfahrens sind, sind allgemein alle Komponenten, die eine katalytische Beschichtung aufweisen. Dies können beispielsweise reine Abgaskatalysatoren sein, beispielsweise Dreiwegekatalysatoren, Oxidationskatalysatoren, NOx-Speicherkatalysatoren oder SCR-Katalysatoren. Zudem kommen katalytisch beschichtete Partikelfilter (insbesondere in Erstposition) in Frage, also Partikelfilter, die mit einer der zuvor genannten Katalysatorbeschichtungen ausgestattet sind. Im Falle eines mit einer dreiwegekatalytischen Beschichtung ausgestatteten Partikelfilters spricht man auch von einem Vierwegekatalysator.

Nach einem Startvorgang der kalten Verbrennungskraftmaschine und während der Warmlaufphase besitzt auch die Verbrennungskraftmaschine keine optimale Betriebstemperatur. Die Schadstoffemissionen in diesen Betriebszuständen sind daher, wie auch eingangs erläutert, beträchtlich. Das ist unter anderem darauf zurückzuführen, dass vielfach eine Kraftstoffanreicherung notwendig ist, um einen stabilen Lauf der Verbrennungskraftmaschine, insbesondere im Fall von Ottomotoren, und eine wünschenswerte Fahrbarkeit zu gewährleisten. Aber gerade in den ersten Minuten nach dem Start ist die Konvertierungsrate des Katalysators sehr niedrig bzw. gar nicht vorhanden. Erschwerend kommt hinzu, dass eine unvollständige Verbrennung wegen der inhomogenen Gemischbildung infolge ungünstiger thermischer Bedingungen im kalten Motor gefördert wird.

Aufgrund der Festlegung und Einhaltung des mindestens einen Begrenzungswerts für ein von der Verbrennungskraftmaschine bereitstellbares Drehmoment oder für eine von der Verbrennungskraftmaschine bereitstellbare Leistung nach einem Startvorgang der kalten Verbrennungskraftmaschine können die Rohemissionen der Verbrennungskraftmaschine auf einem geringeren Niveau gehalten werden, als es ohne Einsatz dieser Begrenzung der Fall wäre. Dementsprechend sinken auch trotz noch inaktiver Abgaskatalysatoren des Abgasnachbehandlungssystems die Endemissionen, die das Fahrzeug in Richtung Umwelt verlassen. Dadurch ist es möglich, streckenbezogene Emissionsgrenzwerte weiterhin einzuhalten. Um eine optimale Betriebsweise der Verbrennungskraftmaschine zu realisieren, ist es folglich vorteilhaft, Kenntnis über die Betriebsbereitschaft des Abgasnachbehandlungssystems zu haben. Durch diese Kenntnis kann ermittelt werden, ob Abgaskatalysatoren, die zur Konvertierung oder Speicherung von Emissionen eingesetzt werden, betriebsbereit sind und ihre Aufgabe erfüllen. Dies erfolgt ab Erreichen der Light-Off Temperatur des Abgaskatalysators. Sobald dieser Fall eintritt, kann das maximal bereitstellbare Drehmoment der Verbrennungskraftmaschine oder die maximal bereitstellbare Leistung der Verbrennungskraftmaschine freigegeben werden, indem der mindestens eine Begrenzungswert aufgehoben wird. Die Reduzierung der Endemissionen der Schadstoffe wird ab diesem Moment durch das wirksame Abgasnachbehandlungssystem sichergestellt. Die Feststellung der Betriebsbereitschaft eines Abgaskatalysators erfolgt anhand eines Vergleichs einer Referenzgröße einer Betriebsgröße mit einem Ist-Wert dieser Betriebsgröße. Bei der Betriebsgröße handelt es sich um eine Größe, die ein Konvertierungsverhalten des mindestens einen Abgaskatalysators beschreibt. Die Betriebsgröße enthält folglich die Information zur Betriebsbereitschaft eines Abgaskatalysators, da anhand der Betriebsgröße festgestellt werden kann, ob der Abgaskatalysator seine Light-Off-Temperatur erreicht hat. Durch Feststellung eines Referenzwerts der Betriebsgröße und weiterhin der Ermittlung eines Ist-Werts dieser Betriebsgröße, lässt sich ein Vergleich durchführen, anhand dessen Aussagen zur Betriebsbereitschaft eines Abgaskatalysators ermöglicht werden.

In bevorzugter Ausgestaltung der Erfindung ist vorgesehen, dass der Begrenzungswert höchstens 80%, bevorzugt höchstens 55% und insbesondere höchstens 30% des maximal bereitstellbaren Drehmoments der Verbrennungskraftmaschine beträgt. Hierdurch lassen sich die Rohemissionen besonders stark reduzieren und es stellt sich eine signifikante Reduzierung ein. Ferner können die verschiedenen Stufen des Begrenzungswerts unter anderem in Abhängigkeit einer Umgebungstemperatur oder einer Temperatur der Verbrennungskraftmaschine bei dem Startvorgang gewählt werden. Hierdurch ist es möglich, bei ungünstigen Betriebsbedingungen einen niedrigeren Begrenzungswert zu wählen, um die streckenbezogenen Emissionsgrenzwerte einzuhalten.

Erfindungsgemäß ist vorgesehen, dass mindestens ein erster und zweiter Begrenzungswert festgelegt werden und das Freigeben des maximal bereitstellbaren Drehmoments der Verbrennungskraftmaschine stufenförmig und/oder in Form einer Rampe in Richtung steigender Begrenzungswerte erfolgt. Die Temperatur eines Abgaskatalysators steigt nach dem Startvorgang der Verbrennungskraftmaschine kontinuierlich an. Dementsprechend können verschiedene Abschnitte des Abgaskatalysators bereits betriebsbereit sein. In diesen Bereichen findet infolgedessen bereits eine Konvertierung der Schadstoffe statt. Insofern besteht die Möglichkeit, die Freigabe des maximal bereitstellbaren Drehmoments der Verbrennungskraftmaschine oder der maximal bereitstellbaren Leistung der Verbrennungskraftmaschine stufenweise durchzuführen. Zunächst wird das bereitstellbare Drehmoment der Verbrennungskraftmaschine oder die bereitstellbare Leistung der Verbrennungskraftmaschine durch den niedrigeren des mindestens ersten und zweiten Begrenzungswertes beschränkt. Nachfolgend erfolgt die Aufhebung des niedrigeren Begrenzungswerts und die Beschränkung durch den höheren des mindestens ersten und zweiten Begrenzungswertes. Zuletzt wird die Beschränkung gänzlich aufgehoben und das maximal bereitstellbare Drehmoment der Verbrennungskraftmaschine oder die maximal bereitstellbare Leistung der Verbrennungskraftmaschine freigegeben. Zwischen den Begrenzungswerten kann die Freigabe stufenförmig erfolgen, mit anderen Worten springt das bereitstellbare Drehmoment der Verbrennungskraftmaschine oder die bereitstellbare Leistung der Verbrennungskraftmaschine vom niedrigeren auf den höheren Begrenzungswert. Alternativ kann die Freigabe in Form einer Rampe erfolgen, was bedeutet, das bereitstellbare Drehmoment der Verbrennungskraftmaschine oder die bereitstellbare Leistung der Verbrennungskraftmaschine wechselt in Form einer stetigen Funktion zwischen den Begrenzungswerten. Das biete den Vorteil eines ruhigen Laufs der Verbrennungskraftmaschine.

Erfindungsgemäß ist die Betriebsgröße die Temperatur des Abgaskatalysators oder eines Teilvolumens des Abgaskatalysators oder des Abgases stromab des Abgaskatalysators. Durch die Ermittlung des Ist-Werts der Temperatur als Betriebsgröße und Vergleich mit einem Referenzwert, lässt sich unmittelbar und präzise feststellen, ob ein Abgaskatalysator seine Light-Off-Temperatur erreicht hat und somit betriebsbereit ist. Der Referenzwert entspricht dabei der Light-Off-Temperatur.

Bevorzugt wird die Temperatur des Abgaskatalysators oder eines Teilvolumens des Abgaskatalysators oder des Abgases stromab des Abgaskatalysators über ein Modell errechnet oder durch einen Temperatursensor gemessen. Da üblicherweise Lambda-Sonden und/oder NOx-Sensorik sowie Kenntnis über die Steuerung der Verbrennungskraftmaschine und deren Luft- und Brennstoffzufuhr zur Verfügung stehen, lässt sich in Verbindung mit weiteren bauteilspezifischen Parametern, wie beispielsweise der Wärmeleitfähigkeit, ein sehr genaues Modell über die Temperaturentwicklung in Abhängigkeit des Betriebsverhaltens des Fahrzeugs für den Abgaskatalysator oder ein Teilvolumen des Abgaskatalysators oder das Abgas stromab des Abgaskatalysators erzeugen. Dieses kann dann zur Bestimmung des Ist-Werts der Temperatur verwendet werden. Auch der Referenzwert der Temperatur lässt sich durch ein Modell eines Abgaskatalysators ermitteln. Alternativ erfolgt die Feststellung des Ist-Werts der Temperatur durch einen Temperatursensor. Dadurch lässt sich eine sehr genaue Temperaturbestimmung durchführen. Ein Modell bietet den Vorteil zusätzliche Sensoren zu vermeiden. Ein Sensor hingegen liefert eine sehr genaue Information über die vorliegenden Zustände. Die Betrachtung eines Teilvolumens bietet den Vorteil, dass in diesen Bereichen bereits eine Konvertierung stattfinden kann, während dies in anderen Bereichen noch nicht der Fall ist, Somit besteht die Möglichkeit, die Freigabe des maximal bereitstellbaren Drehmoments der Verbrennungskraftmaschine oder der maximal bereitstellbaren Leistung der Verbrennungskraftmaschine stufenweise durchzuführen und gleichzeitig die streckenbezogenen Emissionsgrenzwerte einzuhalten.

Alternativ oder zusätzlich ist erfindungsgemäß vorgesehen, dass die Betriebsgröße eine zwischen dem Startvorgang und dem Erreichen der Light-Off-Temperatur des mindestens einen Abgaskatalysators verstrichene Zeit oder ein Zeitäquivalent ist. Das Fahrverhalten (und damit die Motordrehzahl, Last u. ä.) hat erheblichen Einfluss auf die Dynamik der Aufheizung des Abgaskatalysators, dementsprechend kann die Zeit, die dieser Vorgang benötigt, variieren. Daher ist zum einen die Verwendung der Zeit als Betriebsgröße möglich, wobei der Ist-Wert der zwischen dem Start der Verbrennungskraftmaschine und dem Erreichen der Light-Off-Temperatur verstrichenen Zeit und/oder Zeitäquivalent entspricht. Der Referenzwert ist die theoretisch zu erwartenden Zeit und/oder das theoretisch zu erwartende Zeitäquivalent. Variablen, die den Ist-Wert der Zeit oder des Zeitäquivalents beeinflussen, können dabei die Motordrehzahl und die Last sein. Besonders bevorzugt ist die Betriebsgröße ein Zeitäquivalent, wodurch vorteilhafterweise die Ermittlung eines Referenzwerts vereinfacht wird, da einem Zeitäquivalent häufig bereits die Information zu Fahrverhalten und ähnlichem immanent ist.

In weiterer bevorzugter Ausgestaltung der Erfindung ist vorgesehen, dass das Zeitäquivalent ein integrierter (kumulierter) Abgasmassenstrom, eine integrierte (kumulierte) Menge einer Abgaskomponente (NOx, HC, CO, .....), eine in den Katalysator eingetragene integrierte (kumulierte) Energiemenge oder eine durch die Verbrennungskraftmaschine verbrauchte Kraftstoffmenge ist. Dadurch stehen verschiedene geeignete Möglichkeiten zur Verfügung, das Fahrverhalten bzw. die Betriebsweise des Fahrzeugs zu berücksichtigen, die beeinflusst, wieviel Wärmemenge in den Abgaskatalysator zu dessen Aufheizung eingetragen wird, um eine noch präzisere Betrachtung der Betriebsbereitschaft des Abgaskatalysators zu realisieren. Ein integrierter Massenstrom beispielsweise vereint in sich das Fahrverhalten dahingehend, dass in Abhängigkeit der Motordrehzahl und der Last die Kraftstoffzufuhr variiert. Dadurch kann sich der Startpunkt der Konvertierung des Abgaskatalysators bei unterschiedlicher Fahrweise zeitlich voneinander unterscheiden. Durch die Berücksichtigung des über die Zeit zwischen Motorstart und dem Erreichen der Light-Off-Temperatur integrierten Massenstroms wird das Fahrverhalten jedoch inhärent betrachtet und eine Vergleichbarkeit der Dauern für Ist-Wert und Referenzwert zwischen Motorstart und Startpunkt der Konvertierung gewährleistet. Der integrierte Massenstrom lässt sich einfach und mit hoher Genauigkeit berechnen oder modellieren, insbesondere über den Motorbetriebspunkt (Last, Drehzahl) oder die Zylinderfüllung. Alternativ stehen jedoch auch diverse Möglichkeiten zur Messung des Massenstroms zur Verfügung. Auch eine integrierte Abgaskomponente, eine eingetragene Energiemenge oder eine zurückgelegte Fahrstrecke stellen vorteilhafte Zeitäquivalente dar, die ebenfalls mit bekannten Mitteln zu berechnen oder messen sind.

Es kann mit Vorteil vorgesehen sein, dass die Zeit oder das Zeitäquivalent über ein Modell errechnet und/oder aus einem Kennfeld ermittelt wird. Bevorzugt umfasst das Modell bzw. Kennfeld Informationen zu der Abhängigkeit von der Umgebungstemperatur und/oder der Starttemperatur der Verbrennungskraftmaschine. Die Umgebungstemperatur und/oder die Starttemperatur der Verbrennungskraftmaschine wirken sich einerseits auf den Aufwärmvorgang eines Abgaskatalysators aus und andererseits auf die in der Verbrennungskraftmaschine stattfindende Verbrennung. Grundsätzlich lässt sich feststellen, dass sich niedrigere Umgebungstemperaturen und/oder Starttemperaturen der Verbrennungskraftmaschine, negativ auf die Verbrennung auswirken und die Menge an Rohemissionen erhöhen. Des Weiteren nimmt auch z.B. die Dauer bzw. die in den Abgaskatalysator einzutragende Wärmemenge zu, die dieser bis zum Erreichen seiner Light-Off-Temperatur benötigt. Durch Berücksichtigung dieser Parameter, kann eine genaue Aussage zu Ist-Wert und Referenzwert dieser Betriebsgröße vorgenommen werden, sodass Festlegung und Aufhebung eines Begrenzungswerts in optimierter Weise erfolgen kann.

In bevorzugter Ausgestaltung der Erfindung ist vorgesehen, dass der Referenzwert der Betriebsgröße aus einem Kennfeld und/oder Modell in Abhängigkeit eines Zustands des Abgaskatalysators ermittelt wird. Sofern beispielsweise der Katalysator vorgeschädigt oder leicht gealtert ist, so verschiebt sich dessen Light-off-Temperatur gegenüber einem neuen Katalysator zu höheren Temperaturen. So wirken sich beispielsweise Vergiftungszustände auf die katalytische Beschichtung des Abgaskatalysators aus und beeinflussen diese mit der Folge verzögerter, erst bei höheren Katalysator- bzw. Abgastemperaturen einsetzender Konvertierung. Somit wirkt sich der Zustand des Abgaskatalysators auf die Betriebsgröße, die das Erreichen der Light-Off-Temperatur eines Abgaskatalysators definiert, aus. Dieser Problematik wird durch Berücksichtigung des Zustands bei der Ermittlung des Referenzwerts der Betriebsgröße entgegengewirkt, sodass eine optimierte Strategie hinsichtlich der Festlegung und Aufhebung eines Begrenzungswerts erfolgt.

In einer weiteren vorteilhaften Ausführung des erfindungsgemäßen Verfahrens ist die Betriebsgröße eine Konvertierungsrate des Abgaskatalysators. Die Konvertierungsrate sagt aus, ob und in welchem Ausmaße von der Verbrennungskraftmaschine emittierte Schadstoffe durch einen Abgaskatalysator umgewandelt und somit reduziert werden.

Bevorzugt wird die Konvertierungsrate durch Messung von Emissionen stromabwärts des Abgaskatalysators oder durch ein Modell ermittelt. Indem die stromab des Katalysators mit einem Sensor zur Bestimmung der Abgaszusammensetzung gemessene Schadstoff-Konzentration mit der stromauf des Katalysators vorliegenden Schadstoff-Konzentration, also die in den Katalysator einströmende Schadstoff-Menge, verglichen wird, können Bewertungen der Konvertierungsrate erfolgen. Die in den Katalysator einströmende Schadstoff-Menge kann mit einem weiteren, dem Abgaskatalysator vorgeschalteten Sensor zur Bestimmung der Abgaszusammensetzung gemessen werden oder, bevorzugt, in Abhängigkeit des Betriebspunkts der Verbrennungskraftmaschine modelliert werden. Die Modellierung erfolgt üblicherweise mittels eines Kennfelds, das die Schadstoff-Rohemission des Motors in Abhängigkeit von seinem Betriebspunkt (Last, Drehzahl) darstellt. Hierdurch kann für diese Betriebsgröße ein Ist-Wert ermittelt werden, der dann mit einer Referenzgröße, die auch durch ein Modell vorgegeben wird, verglichen wird. Dies ermöglicht präzise Aussagen zu der Aktivität des Abgaskatalysators und ermöglicht eine optimale Betriebsstrategie durch die Begrenzungswerte.

In einer weiteren vorteilhaften Ausführung des erfindungsgemäßen Verfahrens werden mindestens zwei unterschiedliche Betriebsgrößen ermittelt und es wird ein Priorisierungskriterium festgelegt, anhand dessen nach dem Vergleich von dem Referenzwert der Betriebsgröße mit dem Ist-Wert der Betriebsgröße das Freigeben des maximal bereitstellbaren Drehmoments der Verbrennungskraftmaschine erfolgt. Beispielhaft kann es sich hierbei um ein Priorisierungskriterium handeln, aufgrund dessen die Schnelligkeit verglichen wird, die die unterschiedliche Betriebsgrößen benötigen, damit der Ist-Wert den Referenzwert erreicht oder überschreitet. So kann in einem ersten Schritt als erste Betriebsgröße eine Zeit gewählt werden und als zweite Betriebsgröße die Temperatur des Abgaskatalysators. Erreicht in diesem Fall der Ist-Wert der Temperatur des Abgaskatalysators seinen Referenz-Wert, der die Light-Off-Temperatur sein kann, bevor der gemessen Ist-Wert der Zeit den Referenzwert für die Zeit erreicht, erfolgt das Freigeben des maximal bereitstellbaren Drehmoments der Verbrennungskraftmaschine oder der maximal bereitstellbaren Leistung der Verbrennungskraftmaschine durch Aufheben des mindestens einen Begrenzungswerts. Durch die Ermittlung mehrerer Betriebsgrößen und deren Priorisierung wird eine optimierte Betriebsstrategie möglich, die insbesondere eine übermäßige Begrenzung des maximal bereitstellbaren Drehmoments der Verbrennungskraftmaschine oder der maximal bereitstellbaren Leistung der Verbrennungskraftmaschine verhindert.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Systemaufbau eines erfindungsgemäßen Abgasnachbehandlungssystems
- Figur 2: einen Ablaufplan eines Verfahrens zum Betreiben einer Verbrennungskraftmaschine gemäß einer Ausgestaltung der Erfindung

Die Erfindung wird nachfolgend gemäß einer Ausführung der vorliegenden Erfindung am Beispiel seiner Anwendung in einem Fahrzeug ausgeführt. Das Verfahren ist jedoch keineswegs auf diese Anwendungsfälle beschränkt.

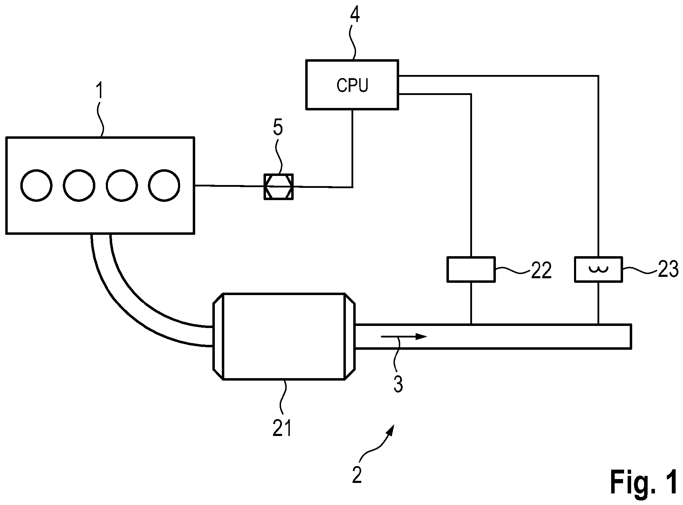

In Figur 1 ist ein Abgasnachbehandlungssystem 2 gemäß einer Ausführung der Erfindung gezeigt, das einer Verbrennungskraftmaschine 1 eines ansonsten nicht weiter dargestellten Fahrzeugs nachgeordnet ist. Stromabwärts der Verbrennungskraftmaschine 1 ist ein Abgaskatalysator, der in diesem Beispiel als Dreiwegekatalysator 21 ausgestaltet ist, angeordnet. Diesem nachgeordnet ist ein Durchflussmessgerät 22 angeordnet, das ausgebildet ist, den Abgasmassenstrom 3 zu messen.

Darüber hinaus umfasst das Abgasnachbehandlungssystem 2 einen Temperatursensor 23. Dieser befindet sich stromabwärts des Dreiwegekatalysators 21 und misst die Temperatur des aus dem Dreiwegekatalysator 21 austretenden Abgases 3. Alternativ kann der Temperatursensor 23 auch direkt an oder in dem Dreiwegekatalysator 21 angeordnet sein, um die Katalysatortemperatur zu messen.

Weiterhin umfasst das Fahrzeug ein Motorsteuergerät bzw. Bordcomputer 4. Er dient unter anderem zur Aufbereitung und Auswertung der Signale, die unter anderem von dem Durchflussmessgerät 22 und dem Temperatursensor 23 stammen. Außerdem steuert er den einen Drehzahlbegrenzer 5, der zwischen Bordcomputer 4 und Verbrennungskraftmaschine signalleitend verbunden ist. Der Drehzahlbegrenzer 5 erhält durch den Bordcomputer 4 ein Signal, das einen Begrenzungswert für das von der Verbrennungskraftmaschine 1 bereitstellbare Drehmoment beinhaltet. Der Drehzahlbegrenzer 5 wiederum steuert die Kraftstoffzufuhr und begrenzt durch die Kontrolle einer Drehzahl das drehzahlabhängige Drehmoment.

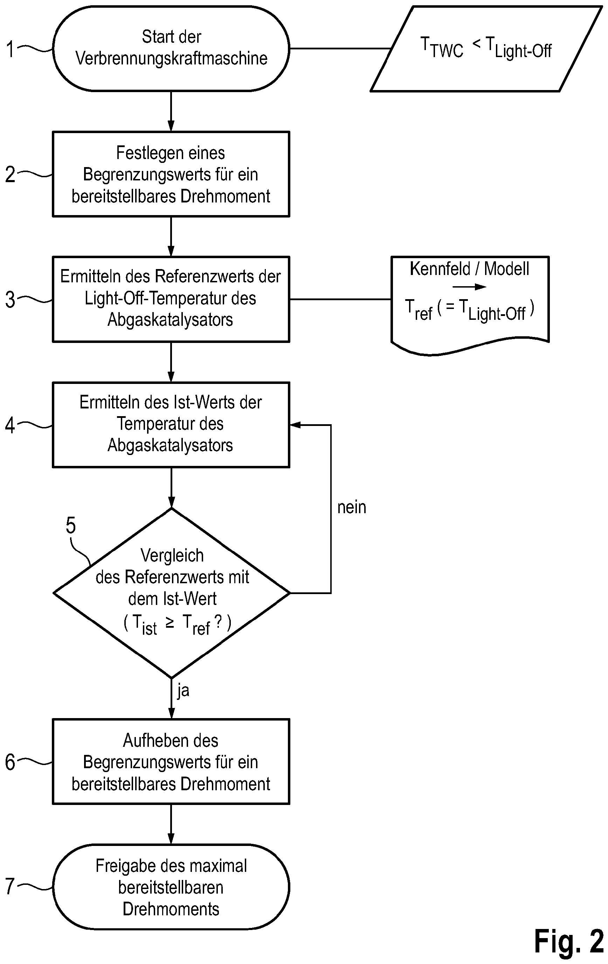

Nachfolgend wird anhand von Figur 2 das erfindungsgemäße Verfahren am Beispiel des Fahrzeugs gemäß Figur 1 erläutert.

Das Verfahren startet in Block 1. Es beginnt damit, dass die Verbrennungskraftmaschine 1 gestartet wird. Vor und zum Zeitpunkt des Starts der Verbrennungskraftmaschine 1 weist der Dreiwegekatalysator 21 eine unterhalb seiner Light-Off-Temperatur liegende Temperatur auf.

Um während dieser Phase die Rohemissionen, die durch den Abgaskatalysator 21 noch nicht ausreichend umgewandelt werden, so niedrig wie möglich zu halten, wird in Block 2 durch den Bordcomputer 4 ein Begrenzungswert für ein von der Verbrennungskraftmaschine 1 bereitstellbares Drehmoment festgelegt. Dabei liegt der Begrenzungswert unterhalb des maximal bereitstellbaren Drehmoments der Verbrennungskraftmaschine 1. Mit anderen Worten kann die Verbrennungskraftmaschine 1 im normalen Betrieb 100% ihres maximal bereitstellbaren Drehmoments zur Verfügung stellen. Der Begrenzungswert schränkt diesen Wert ein, indem der Begrenzungswert beispielhaft auf 70% des maximal bereitstellbaren Drehmoments der Verbrennungskraftmaschine 1 festgelegt wird. Der Bordcomputer 4 übermittelt den Begrenzungswert an den Drehzahlbegrenzer 5, der durch die Steuerung der Kraftstoffzufuhr die Drehzahl und infolgedessen das Drehmoment kontrolliert und in diesem Fall begrenzt.

In Block 3 ermittelt der Bordcomputer 4 anhand eines Kennfelds einen Referenzwert für die jeweilige Betriebsgröße. In diesem Fall handelt es sich bei der Betriebsgröße um die Temperatur, wobei der Referenzwert der Temperatur der katalysatorspezifischen Light-Off-Temperatur entspricht. In einer weiteren nicht dargestellten Ausgestaltung des Verfahrens kann bei diesem Schritt ein Zustand des Abgaskatalysators berücksichtigt werden, da dieser Einfluss auf die Light-Off-Temperatur des Katalysators nimmt.

In Block 4 wird die tatsächliche vorherrschende Temperatur des Dreiwegekatalysators 21 festgestellt. Mit anderen Worte wird der Ist-Wert der Betriebsgröße ermittelt. Gemäß dem in Figur 1 gezeigten Aufbau des Abgasnachbehandlungssystems 2 wird die Temperatur durch den Temperatursensor 23 gemessen. Das Motorsteuergerät 4 stellt anhand des Signals von dem Temperatursensor 23 die aktuell im Abgas 3 und damit im Dreiwegekatalysator 21 vorliegende Temperatur fest. Alternativ wird die Katalysatortemperatur unter anderem anhand einer dynamischen Verbrennungsrechnung modelliert. Nach einem längeren Motorstillstand kann hier beispielsweise angenommen werden, dass die Katalysatortemperatur der Umgebungstemperatur entspricht, oder kann auch anhand der Verlustwärme durch einen Abkühlvorgang berechnet werden.

In Block 5 vergleicht der Bordcomputer 4 dann den durch Messung für den Dreiwegekatalysator 21 ermittelten Ist-Wert der Temperatur mit dem aus dem Kennfeld ermittelten Referenzwert der Temperatur. Für den Fall, dass der Ist-Wert der Temperatur den Referenzwert der Temperatur nicht erreicht oder überschreit, bleibt die Maßnahme aktiv, das heißt, der Begrenzungswert für ein von der Verbrennungskraftmaschine 1 bereitstellbares Drehmoment wird aufrecht erhalten. Sobald der Ist-Wert der Temperatur den Referenzwert der Temperatur jedoch erreicht oder überschreitet wird das Verfahren in Block 6 fortgesetzt.

Demnach wird in Block 6 nach Erreichen oder Überschreiten des Referenzwerts der Temperatur durch den Ist-Wert der Temperatur das maximal bereitstellbaren Drehmoments der Verbrennungskraftmaschine freigegeben. Hierfür steuert der Bordcomputer 4 den Drehzahlbegrenzer 5 und der Begrenzungswert wird aufgehoben.

In Block 7 ist die Drehmomentbegrenzung nicht mehr aktiv. Der anfangs festgelegte Begrenzungswert wurde zuvor aufgehoben und die Kraftstoffzufuhr freigegeben.

Eine in Figur 2 nicht dargestellte mögliche Ergänzung des Verfahrens in einer weiteren Ausführung, sieht vor, dass zusätzlich zu der Temperatur als Betriebsgröße insbesondere auch ein Zeitäquivalent als Alternative oder in Kombination mit der Temperatur in Verbindung mit einem Priorisierungskriterium als zu erfassende Betriebsgröße dienen kann. Demzufolge handelt es sich bei dem Zeitäquivalent um eine eingetragene Wärmemenge. Entsprechend erfolgt unmittelbar nach dem Start der Verbrennungskraftmaschine 1 die Messung dieses Zeitäquivalents, mit anderen Worten die Messung des Abgasmassenstroms mit Hilfe des Durchflussmessgeräts 22 und dessen Integrierung mit der fortschreitenden Zeit. In Kombination mit einer Verbrennungsrechnung sowie der Temperatur des Abgases lässt sich somit bestimmen, wie groß die Wärmemenge ist, die in den Abgaskatalysator eingetragen wird. Alternativ wird der aktuelle Abgasmassenstrom kennfeldmäßig in Abhängigkeit des Betriebspunkts der Verbrennungskraftmaschine 1 modelliert und integriert.

### Bezugszeichenliste

- 1: Verbrennungskraftmaschine
- 2: Abgasnachbehandlungssystem
- 21: Abgaskatalysator
- 22: Durchflussmessgerät
- 23: Temperatursensor
- 3: Abgas
- 4: Motorsteuergerät/Bordcomputer
- 5: Drehzahlbegrenzer

## Patentansprüche

1. Verfahren zum Betreiben einer Verbrennungskraftmaschine (1) in einem Fahrzeug, das ein stromabwärts der Verbrennungskraftmaschine (1) angeordnetes Abgasnachbehandlungssystem (2), das mindestens einen Abgaskatalysator (21) aufweist, umfasst, umfassend folgende Schritte:
nach einem Start der Verbrennungskraftmaschine (1), bei dem der Abgaskatalysator (21) eine unterhalb seiner Light-Off-Temperatur liegende Temperatur aufweist, Festlegen mindestens eines Begrenzungswerts für ein von der Verbrennungskraftmaschine (1) bereitstellbares Drehmoment oder für eine von der Verbrennungskraftmaschine (1) bereitstellbare Leistung, wobei der Begrenzungswert unterhalb des maximal bereitstellbaren Drehmoments der Verbrennungskraftmaschine (1) oder unterhalb der maximal bereitstellbaren Leistung der Verbrennungskraftmaschine (1) liegt,
Ermitteln eines Referenzwerts einer Betriebsgröße, wobei die Betriebsgröße ein Konvertierungsverhalten des mindestens einen Abgaskatalysators (21) beschreibt,
Ermitteln eines Ist-Werts der Betriebsgröße,
Vergleichen des Referenzwerts der Betriebsgröße mit dem Ist-Wert der Betriebsgröße, wobei die Betriebsgröße die Temperatur des Abgaskatalysators (21) oder eines Teilvolumens des Abgaskatalysators (21) oder die Temperatur des Abgases stromab des Abgaskatalysators (21) ist, oder wobei die Betriebsgröße eine zwischen dem Startvorgang und dem Erreichen der Light-Off-Temperatur des mindestens einen Abgaskatalysators (21) verstrichene Zeit oder ein Zeitäquivalent ist, wobei das Zeitäquivalent ein integrierter Abgasmassenstrom, eine integrierte Menge einer Abgaskomponente, eine eingetragene Energiemenge oder eine verbrauchte Kraftstoffmenge ist, wobei mindestens ein erster und zweiter Begrenzungswert festgelegt werden und das Freigeben des maximal bereitstellbaren Drehmoments der Verbrennungskraftmaschine (1) stufenförmig und/oder in Form einer Rampe in Richtung steigender Begrenzungswerte erfolgt,
nach Erreichen oder Überschreiten des Referenzwerts der Betriebsgröße durch den Ist-Wert der Betriebsgröße, Freigeben des maximal bereitstellbaren Drehmoments der Verbrennungskraftmaschine (1) oder der maximal bereitstellbaren Leistung der Verbrennungskraftmaschine (1).

2. Verfahren nach Anspruch 1, wobei der Begrenzungswert höchstens 80%, bevorzugt höchstens 55% und insbesondere höchstens 30% des maximal bereitstellbaren Drehmoments der Verbrennungskraftmaschine (1) beträgt.

3. Verfahren nach einem der vorhergehenden Ansprüche, wobei der Referenzwert aus einem Kennfeld und/oder Modell in Abhängigkeit eines Zustands des Abgaskatalysators (21) ermittelt wird.

4. Fahrzeug mit einer Verbrennungskraftmaschine (1), einem Motorsteuergerät (4) und einem Abgasnachbehandlungssystem (2), wobei das Abgasnachbehandlungssystem (2) den Abgaskatalysator (21) sowie mindestens einen Temperatursensor (23) umfasst, **dadurch gekennzeichnet, dass** das Motorsteuergerät (4) dazu eingerichtet ist, ein Verfahren zum Betreiben einer Verbrennungskraftmaschine nach einem der Ansprüche 1 bis 3 auszuführen.

## Claims

1. Method for operating an internal combustion engine (1) in a vehicle comprising an exhaust gas aftertreatment system (2), which is arranged downstream of the internal combustion engine (1) and has at least one exhaust gas catalytic converter (21), comprising the following steps:
after an ignition of the internal combustion engine (1), in which the exhaust gas catalytic converter (21) has a temperature below its light-off temperature, establishing at least one limiting value for a torque that can be provided by the internal combustion engine (1) or for a power that can be provided by the internal combustion engine (1), wherein the limiting value is below the maximum providable torque of the internal combustion engine (1) or below the maximum providable power of the internal combustion engine (1),
determining a reference value of an operating variable, wherein the operating variable describes a conversion behavior of the at least one exhaust gas catalytic converter (21),
determining an actual value of the operating variable,
comparing the reference value of the operating variable with the actual value of the operating variable, wherein the operating variable is the temperature of the exhaust gas catalytic converter (21) or a partial volume of the exhaust gas catalytic converter (21) or the temperature of the exhaust gas downstream of the exhaust gas catalytic converter (21), or wherein the operating variable is a time elapsed between the ignition process and the reaching of the light-off temperature of the at least one exhaust gas catalytic converter (21) or a time equivalent, wherein the time equivalent is an integrated exhaust gas mass flow, an integrated quantity of an exhaust gas component, a input energy quantity, or a consumed fuel quantity, wherein at least a first and a second limiting value are defined, and the release of the maximum providable torque of the internal combustion engine (1) takes place in a step-like manner and/or in the form of a ramp in the direction of increasing boundary values,
after reaching or exceeding the reference value of the operating variable by the actual value of the operating variable, releasing the maximum providable torque of the internal combustion engine (1) or the maximum providable power of the internal combustion engine (1).

2. Method according to claim 1, wherein the limiting value is at most 80%, preferably at most 55%, and in particular at most 30% of the maximum providable torque of the internal combustion engine (1).

3. Method according to any of the preceding claims, wherein the reference value is determined from a characteristic map and/or model on the basis of a state of the exhaust gas catalytic converter (21).

4. Vehicle having an internal combustion engine (1), an engine control unit (4) and an exhaust gas aftertreatment system (2), the exhaust gas aftertreatment system (2) comprising the exhaust gas catalytic converter (21) and at least one temperature sensor (23), **characterized in that** the engine control unit (4) is designed to carry out a method for operating an internal combustion engine according to any of claims 1 to 3.

## Revendications

1. Procédé pour faire fonctionner un moteur à combustion interne (1) dans un véhicule, qui comprend un système de post-traitement des gaz d'échappement (2), qui présente au moins un catalyseur de gaz d'échappement (21), agencé en aval du moteur à combustion interne (1) comprenant les étapes suivantes :
après un démarrage du moteur à combustion interne (1), dans lequel le catalyseur de gaz d'échappement (21) présente une température se trouvant au-dessous de sa température d'amorçage, la fixation d'au moins une valeur de limitation pour un couple pouvant être fourni par le moteur à combustion interne (1) ou pour une puissance pouvant être fournie par le moteur à combustion interne (1), dans lequel la valeur de limitation se trouve au-dessous du couple maximal pouvant être fourni du moteur à combustion interne (1) ou au-dessous de la puissance maximale pouvant être fournie du moteur à combustion interne (1),
la détermination d'une valeur de référence d'une grandeur de fonctionnement, dans lequel la grandeur de fonctionnement décrit un comportement de conversion de l'au moins un catalyseur de gaz d'échappement (21),
la détermination d'une valeur réelle de la grandeur de fonctionnement,
la comparaison de la valeur de référence de la grandeur de fonctionnement à la valeur réelle de la grandeur de fonctionnement, dans lequel la grandeur de fonctionnement est la température du catalyseur de gaz d'échappement (21) ou d'un volume partiel du catalyseur de gaz d'échappement (21) ou la température du gaz d'échappement en aval du catalyseur de gaz d'échappement (21) ou dans lequel la grandeur de fonctionnement est un temps écoulé ou un équivalent de temps entre le processus de démarrage et l'atteinte de la température d'amorçage de l'au moins un catalyseur de gaz d'échappement (21), dans lequel l'équivalent de temps est un débit massique intégré de gaz d'échappement, une quantité intégrée d'un composant de gaz d'échappement, une quantité d'énergie enregistrée ou une quantité de carburant consommée, dans lequel au moins une première et une seconde valeur de limitation sont fixées et la libération du couple maximal pouvant être fourni du moteur à combustion interne (1) est effectuée par étapes et/ou sous la forme d'une rampe en direction de valeurs de limitation croissantes,
après l'atteinte ou le dépassement de la valeur de référence de la grandeur de fonctionnement par la valeur réelle de la grandeur de fonctionnement, la libération du couple maximal pouvant être fourni du moteur à combustion interne (1) ou de la puissance maximale pouvant être fournie du moteur à combustion interne (1).

2. Procédé selon la revendication 1, dans lequel la valeur de limitation est d'au plus 80 %, de préférence d'au plus 55 % et en particulier d'au plus 30 % du couple maximal pouvant être fourni du moteur à combustion interne (1).

3. Procédé selon l'une des revendications précédentes, dans lequel la valeur de référence est déterminée à partir d'un diagramme caractéristique et/ou d'un modèle en fonction d'un état du catalyseur de gaz d'échappement (21).

4. Véhicule comportant un moteur à combustion interne (1), un appareil de commande de moteur (4) et un système de post-traitement des gaz d'échappement (2), dans lequel le système de post-traitement des gaz d'échappement (2) comprend le catalyseur de gaz d'échappement (21) ainsi qu'au moins un capteur de température (23), **caractérisé en ce que** l'appareil de commande de moteur (4) est conçu pour réaliser un procédé pour faire fonctionner un moteur à combustion interne selon l'une des revendications 1 à 3.
